# EUROPEAN PATENT APPLICATION

(11) **EP 4 793 168 A1**
(43) Date of publication of application: **19.08.2026**
(21) Application number: 25158407.4
(22) Date of filing: 17.02.2025
(51) Int. Cl.: B64C 9/00, B64C 9/38, B64C 15/12, B64C 29/00, B64U 10/20, B64U 30/10, B64U 50/18

(54) **AN AIRCRAFT AND A METHOD FOR CONTROLLING FLIGHT OF THE AIRCRAFT**

(71) Applicant: Porta Saber Lda, 2710-693 Sintra (PT)
(72) Inventor: Izzatdust, Elzad, 2750-368 Cascais (PT)
(74) Representative: Koivisto, Harri Kristian

(57) **Abstract**

An aircraft (10) comprises a fuselage (10), at least one wing structure (20) extending laterally from the fuselage, and a plurality of movable engines (30, 32). Each engine (30, 32) is operatively connected to at least one flap (40) or aileron (42) mounted on the wing structure (20). The engines (30, 32) tilt between a horizontal flight position and a vertical thrust position, enabling thrust vectoring and aerodynamic stabilization. A first engine (30a) is positioned on the top surface (22) of the wing (20) and a second engine (30b) on the bottom surface (24). The wing (20) has an opening (50) along the airflow trajectory of the engines (30, 32) when in vertical thrust mode, selectively covered by a hatch (52). The aircraft (10) supports vertical ascent by directing thrust through the wing opening (50), with flaps (40) and ailerons (42) adjusting for stability.

## Description

### BACKGROUND

The present disclosure relates to aircrafts and, more specifically, to an aircraft wing structure integrating movable engines. The disclosure further relates to a method of controlling flight of an aircraft. The aircraft disclosed hereinafter may be an unmanned aerial vehicle (UAV), though the design principles may be applicable to manned aircraft as well.

Conventional fixed-wing aircrafts rely on aerodynamic lift generated by the wings, requiring sufficient runway length for take-off and landing. Rotary-wing aircraft, such as helicopters, enable vertical take-off and landing (VTOL) but suffer from limited forward flight efficiency due to drag and power requirements. Hybrid configurations, including tilt-rotor aircraft, address some of these limitations by combining rotary-wing and fixed-wing capabilities. Many of these designs introduce mechanical complexity and transitional instability between hover and cruise flight.

A further limitation in current UAV and VTOL aircraft designs is manoeuvrability in tight or obstacle-filled environments. Many aircrafts rely solely on aerodynamic control surfaces, such as rudders, ailerons, and elevators, which require significant forward motion to be effective. The ability to perform rapid, stable vertical ascent and transition seamlessly to horizontal flight remains a challenge for various flying applications. Examples of such applications are urban air mobility, firefighting drones, or military applications.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

Disclosed herein is an aircraft comprising a fuselage, at least one laterally extending wing structure, and a plurality of movable engines. Each engine is operatively connected to at least one aerodynamic control surface, such as a flap or aileron, mounted on the wing structure. The movable engines (30) are configured to transition between a horizontal flight position and a vertical thrust position, thereby facilitating thrust vectoring, directional control, and aerodynamic stabilization.

The movable engines are mounted in a paired configuration on opposite sides of the wing structure, with a first engine positioned on the top surface of the wing and a second engine positioned on the bottom surface of the wing. The wing structure comprises at least one opening positioned along the trajectory of at least one movable engine's airflow when the engine is tilted into the vertical thrust position, allowing propulsion forces to be directed through the wing structure.

In one embodiment, the wing opening is selectively covered by a flap, which exposes the opening when the engine moves into the vertical thrust position. The leading edge of the wing structure may include at least one paired configuration of engines, while the trailing edge may include additional paired configurations, providing enhanced thrust distribution and flight stability.

In another embodiment, the aircraft comprises three movable engines in a paired configuration, wherein a first engine is positioned on the leading edge, while a second and third engine are positioned on the trailing edge, with one engine above and one below the wing. The combination of leading-edge and trailing-edge engines facilitates efficient vertical ascent, wherein the engines tilt into the vertical thrust position, directing propulsion forces downward.

The leading-edge and trailing-edge engines coordinate thrust to generate lift. The thrust from the leading-edge engine passes through a wing opening, ensuring uninterrupted airflow and lift distribution. The trailing-edge engines contribute additional lift and balance.

The hinged flight control surfaces dynamically adjust to counteract aerodynamic disturbances, ensuring stability during ascent, descent, and transitional phases.

The disclosed aircraft design addresses the challenges according to prior art by placing movable engines on both the leading and trailing edges of the wing structure and incorporating airflow openings in the wing. The engines are configured to tilt between a horizontal flight position and a vertical thrust position, allowing the aircraft to efficiently transition between horizontal cruise flight and vertical take-off and landing (VTOL) operations. The wing structure also comprises airflow openings, enabling thrust to be directed through the wing to enhance stability and manoeuvrability. This configuration enables precise thrust vectoring, omnidirectional manoeuvrability, and efficient take-off and landing in confined spaces.

Many of the attendant features will be more readily appreciated as they become better understood by reference to the following detailed description considered in connection with the accompanying drawings. The embodiments described below are not limited to implementations which solve any or all the disadvantages of known aircrafts or unmanned aerial vehicles.

### BRIEF DESCRIPTION OF THE DRAWINGS

The present description will be better understood from the following detailed description read in light of the accompanying drawings, wherein
FIG. 1 illustrates schematically one simplified exemplary embodiment of an aircraft;
FIG. 2 illustrates schematically another simplified exemplary embodiment of the aircraft;
FIG. 3a illustrates schematically a simplified exemplary embodiment of the aircraft in vertical ascent;
FIG. 3b illustrates schematically the same aircraft in vertical descent;
FIG. 4a illustrates schematically a simplified exemplary embodiment of another aircraft in vertical ascent;
FIG. 4b illustrates schematically the same aircraft in vertical descent;
FIG. 4c illustrates schematically the same aircraft in fully vertical descent;
FIG. 5 illustrates schematically a simplified exemplary embodiment of the aircraft manoeuvrability;
FIG. 6 is a flowchart illustrating step of a method for controlling flight of the aircraft; and
FIG. 7 illustrates schematically one simplified exemplary embodiment of the aircraft.

Like reference numerals are used to designate like parts in the accompanying drawings.

### DETAILED DESCRIPTION

The detailed description provided below in connection with the appended drawings is intended as a description of the present examples and is not intended to represent the only forms in which the present example may be constructed or utilized. However, the same or equivalent functions and sequences may be accomplished by different examples.

Although the present examples are described and illustrated herein as being implemented in an aircraft, the apparatus described is provided as an example and not a limitation. As those skilled in the art will appreciate, the present examples are suitable for application in a variety of different types of aircrafts, unmanned aerial vehicles or drones.

Unmanned aerial vehicles, commonly known as a drones, are aircrafts without a human pilot on board. The unmanned aerial vehicles may be autonomous or be controlled by an external controller such as a wirelessly connected remote controller. During the remote-controlled scenario, the unmanned aerial vehicle may comprise a subset of autonomous functions that assist the external controller.

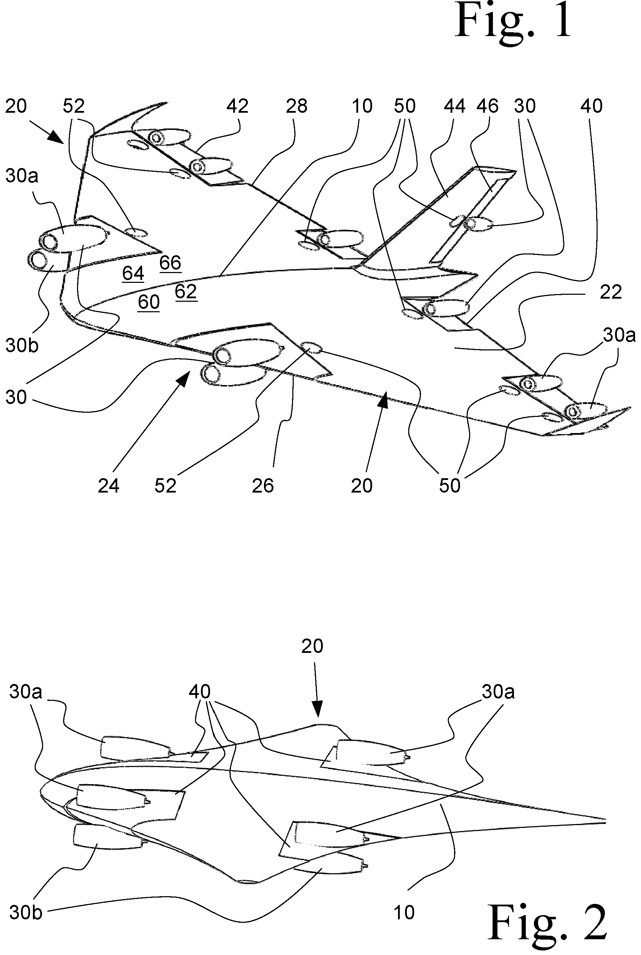

FIG. 1 illustrates an exemplary embodiment of the aircraft comprising a fuselage 10 and at least one wing structure 20 extending laterally from the fuselage 10. The wing structure 20 supports multiple movable engines 30, which are operatively connected to hinged flight control surfaces. The hinged flight control surface refers to a movable aerodynamic surface attached to the wing, tail, or fuselage of the aircraft, designed to influence its flight dynamics by altering airflow and controlling attitude. These surfaces operate by deflecting air to generate forces that enable changes in lift, roll, pitch, or yaw. Hinged flight control surfaces are actuated manually or automatically via hydraulic, electric, or mechanical systems that are configured to move the combination of the movable engines 30 and the flight control surface. Examples of hinged flight control surfaces within the aircraft are a flap 40, an aileron 42, a rudder 46, an elevator, a canard, and a trim tab. In the present exemplary embodiment, the flaps 40 are arranged on the leading edge and on the trailing edge of the wing structure 20.

The exemplary embodiment according to FIG. 1 comprises a vertical stabilizer 44, wherein the movable engines 30 are mounted on opposite sides of the vertical stabilizer 44. In the illustration the second movable engine mounted on the vertical stabilizer is not visible. FIG. 2 illustrates schematically one alternative simplified exemplary embodiment of the aircraft that does not have the vertical stabilizer 44. In this embodiment, the controllability provided by the combination of movable engines 30 and the hinged control surfaces compensates the lack of vertical stabilizer 44.

Size of the aircraft may vary and may be designed to be suitable for a specific application. The aircraft comprises a fuselage 10. The fuselage 10 may be a rigid structure covered by a light-weight housing. In one exemplary design, the fuselage 10 comprises external housing portions of the vehicle, i.e. the external shell. In one embodiment the aircraft comprises a rigid fuselage 10 and a light-weight external shell. The fuselage 10 may be made of metal, plastic, composite or any other material providing sufficient rigidity for the aircraft.

The aircraft comprises a fixed-wing structure. In one embodiment, the wing structure is a delta wing structure, where the wing is shaped in the form of a triangle. Each movable engine 30 is mounted in a paired configuration, with a first engine 30a positioned on the top surface 22 of the wing structure 20 and a second engine 30b positioned on the bottom surface 24 of the wing structure 20. This opposing placement of engines 301, 30b allows for enhanced thrust vectoring, improving the aircraft's manoeuvrability and stability during both horizontal and vertical flight.

The engines 30 are integrated directly onto the wing flaps, rather than being fixed to the main fuselage 10 or static wing structures. This integration enables the aircraft to achieve precise control over thrust vectoring and aerodynamic stability, particularly in VTOL (Vertical Take-Off and Landing) and STOL (Short Take-Off and Landing) applications.

The top and bottom surfaces of the aircraft in the present embodiment are mirror images of each other, meaning the aircraft does not have a defined "top" or "bottom" side during flight. This symmetrical configuration enables unconventional flight orientations and inverted manoeuvres, increasing operational flexibility.

The flaps 40 and/or ailerons 42 can rotate up to +/- 90 degrees from their neutral position to a vertical thrust position. The flaps 40 may have a rotational range of 180 degrees , or over 180 degrees. In one embodiment, the range of the flaps 40 is 210 degrees. The additional rotational range improves the manoeuvrability in vertical movements. The ability to independently control the angle of each flap 40 allows for precise control over the direction of engine thrust, optimizing take-off, landing, and in-flight manoeuvres. This configuration allows the aircraft to take off and land in various conditions, from a standing VTOL position to a conventional rolling take-off. Furthermore, the configuration allows to modify thrust angles dynamically, controlling flight path without requiring large control surfaces, and rapidly adjust altitude and angle of attack, improving responsiveness in confined or unpredictable environments.

The wing structure 20 comprises at least one opening 50 positioned along the trajectory of the airflow from the movable engines 30 when tilted into the vertical thrust position. This opening 50 allows thrust to pass through the wing, preventing airflow obstruction and improving vertical stability and lift distribution.

In one embodiment, the wing opening 50 is selectively covered by a hatch 52. When the movable engine 30 tilts into the vertical thrust position, the hatch 52 moves to expose the opening 50, ensuring optimal airflow passage and thrust efficiency. Conversely, when the engine transitions back to horizontal flight mode, the hatch covers the opening, minimizing aerodynamic drag. In one embodiment, the hatch 52 operation is mechanically linked to the angle of the flap 40 or aileron 42. When the flap 40 angle is nearing the +/- 90 degree angle, the mechanical linkage causes the hatch 52 to open. In one embodiment, the wing opening 50 is open at all times.

The hatch 52, which selectively covers or exposes the wing opening 50, may be implemented using various mechanisms, each with distinct structural and aerodynamic properties. The selection of the appropriate closure mechanism depends on specific flight performance requirements, weight considerations, and operational efficiency.

In one embodiment, the hatch 52 is a sliding panel, which moves either horizontally or vertically to uncover the opening 50 in the wing structure. This configuration ensures that, when closed, the sliding panel remains flush with the wing surface, minimizing aerodynamic disruption. The sliding motion may be facilitated through a mechanical, electrical, or hydraulic actuator, depending on the structural constraints of the aircraft. The mechanism offers a robust and simple solution with minimal impact on aerodynamics.

In one embodiment, the hatch 52 is a retractable louver system. This design utilizes multiple slats or vanes that can open and close in a controlled manner, allowing for precise airflow regulation. The louvers can be angled or adjusted variably, depending on the required airflow direction and lift characteristics. This mechanism provides structural strength when closed, while also enabling gradual or full exposure of opening 50.

In one embodiment, the hatch 52 is a hinged door mechanism, which consists of a single or multi-section flap that rotates along a hinge to either cover or expose the opening 50. This configuration provides a simple, mechanically straightforward solution, which can be spring-loaded or actively controlled through an electromechanical actuator. The hinged door maintains durability and structural rigidity when closed, ensuring protection against unwanted airflow disruptions.

In one embodiment, the hatch 52 comprises a butterfly valve mechanism, where a circular plate rotates within the opening 50 to restrict or permit airflow. This design allows for precise airflow control, and due to its compact and lightweight structure, it is particularly suitable for high-speed aircraft where minimal aerodynamic disruption is beneficial. The butterfly valve can be actuated using a rotational actuator, allowing for quick opening, and closing movements.

In one embodiment, the hatch 52 comprises a flexible membrane cover, where a stretchable membrane or fabric material is used to cover opening 50 when airflow is not required. The membrane retracts when airflow must be permitted, either by rolling up or folding away. This solution offers aerodynamic continuity, as the membrane remains flush with the wing surface when closed. Additionally, its lightweight properties contribute to improved aircraft efficiency.

In one embodiment, the hatch 52 comprises a rotating disk cover, where a circular or elliptical disk is positioned over opening 50 and rotates to either expose or cover the airflow passage. This mechanism provides rapid actuation with low mechanical wear, ensuring high-speed closure capability. The minimal drag impact in the closed position makes it ideal for aerodynamically sensitive applications.

In one embodiment, the hatch 52 comprises a collapsible baffle system, composed of folding or retractable panels that open in a controlled manner, similar to an accordion or shutter-style design. The collapsible baffles allow for smooth airflow regulation while maintaining a compact retracted state when not in use. The mechanism can be actuated mechanically, electrically, or pneumatically, providing versatility in aircraft control system integration.

In one embodiment, the hatch 52 comprises a telescopic shield, composed of nested panels that extend or retract to cover or expose opening 50. This configuration ensures minimal aerodynamic disturbance when closed, as the telescopic panels fit seamlessly into the wing structure. The telescopic nature of the system allows for adjustable opening sizes, providing variable airflow control

The selection of the most suitable closure mechanism for the hatch 52 depends on specific aircraft design requirements, including aerodynamic efficiency, structural durability, weight constraints, and desired precision in airflow control. The sliding panel, butterfly valve, and telescopic shield provide optimal aerodynamic efficiency, whereas the hinged door and collapsible baffle system offer structural robustness. A flexible membrane or louver system may be preferred for applications requiring lightweight solutions, while precision-controlled applications may benefit from butterfly valves or retractable louvers.

The hatch 52, regardless of its specific embodiment, is essential in regulating airflow through the wing structure, contributing to thrust vectoring, aerodynamic stabilization, and optimized lift control.

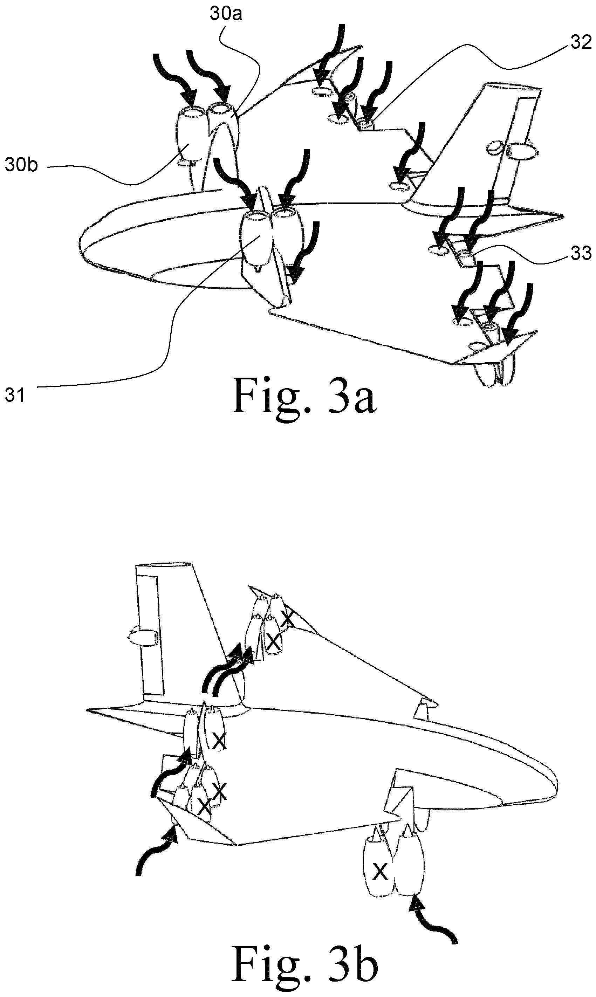

As illustrated in FIG. 1 and FIG. 3, the wing structure 20 incorporates at least three movable engines 30 in a paired configuration, ensuring optimal thrust balance and control. A first engine pair 31 is positioned on the flap 40 positioned on the leading edge 26 of the wing. A second engine pair 32 and a third engine pair 33 are positioned on the trailing edge 28, with one engine 30a above the wing and one engine 30b below the wing. The second engine pair 32 is mounted on the aileron 42, and the third engine pair 33 is mounted on the flap 40. The number of engine pair within the hinged control surface may vary according to the purposed application of the , as in the example of FIG. 1 and FIG. 3 the aileron 42 comprises two engine pairs 32. This configuration enhances thrust vectoring for VTOL operations, ensuring balanced lift and controlled ascent. Additionally, it enhances horizontal flight efficiency, reducing drag while maintaining manoeuvrability. Aerodynamic stability is improved, particularly during transitions between vertical and horizontal flight.

FIG. 3a illustrates the vertical ascent sequence for one embodiment of the aircraft, demonstrating how the aircraft generates lift using its wing and engine configuration. The airflow is illustrated by the curved arrows. To initiate vertical ascent, the engines 30a, 30b tilt into the vertical thrust position, directing propulsion forces downward. The leading-edge engines 31 and trailing-edge engines 32, 33 coordinate thrust, ensuring stable and controlled lift generation. Airflow from at least one leading-edge engine 31 is directed through a wing opening, ensuring uninterrupted airflow and lift distribution. The trailing-edge engines 32, 33 contribute additional thrust, balancing the aircraft during ascent. Flaps 40 or ailerons 42 dynamically adjust to counteract aerodynamic disturbances and stabilize lift distribution. This combination of paired engines 30a, 30b and airflow redirection allows the aircraft to achieve stable vertical take-off and landing, even in tight or urban environments where traditional aircraft might struggle.

FIG. 3b illustrates the vertical descent sequence of the same aircraft. The front flaps 40 and rear flaps 40 operate in opposite directions to optimize the aircraft's aerodynamic performance. This configuration enhances the take-off, landing, and manoeuvrability of the aircraft, ensuring precise control during various phases of flight. In this system, the status of the engines can be categorized based on their operational state. Active engines, represented by black arrows, are responsible for generating thrust essential for aircraft acceleration, descent control, and manoeuvring. These engines play a critical role, particularly during landing sequences or altitude loss manoeuvres, where additional thrust is needed beyond the effects of gravitational pull. By increasing the aircraft's manoeuvrability, these engines allow for more precise adjustments to the flight path, improving responsiveness in dynamic flight conditions.

Conversely, shut-down engines, indicated by black crosses, remain inactive during certain flight phases and do not contribute to thrust generation. However, these engines can be activated when necessary, providing operational flexibility based on flight conditions or special manoeuvring requirements. This adaptive approach enhances the overall performance and energy efficiency of the aircraft, ensuring that thrust is generated only when needed.

This integrated system of flap control and selective engine activation significantly improves the aerodynamic balance of the aircraft. During take-off and landing, the thrust produced by the active engines allows for rapid vertical ascent and controlled descent. Simultaneously, the coordinated motion of the front and rear flaps, moving in opposite directions, counteracts unwanted aerodynamic forces, maintaining the aircraft's stability and increasing its overall manoeuvrability.

This configuration is particularly advantageous in aircraft designed for VTOL (Vertical Take-Off and Landing) and STOL (Short Take-Off and Landing) applications. By enabling precise thrust vectoring and dynamic control adjustments, the system allows the aircraft to operate in confined spaces, execute rapid take-offs, and maintain stable flight performance in challenging environments.

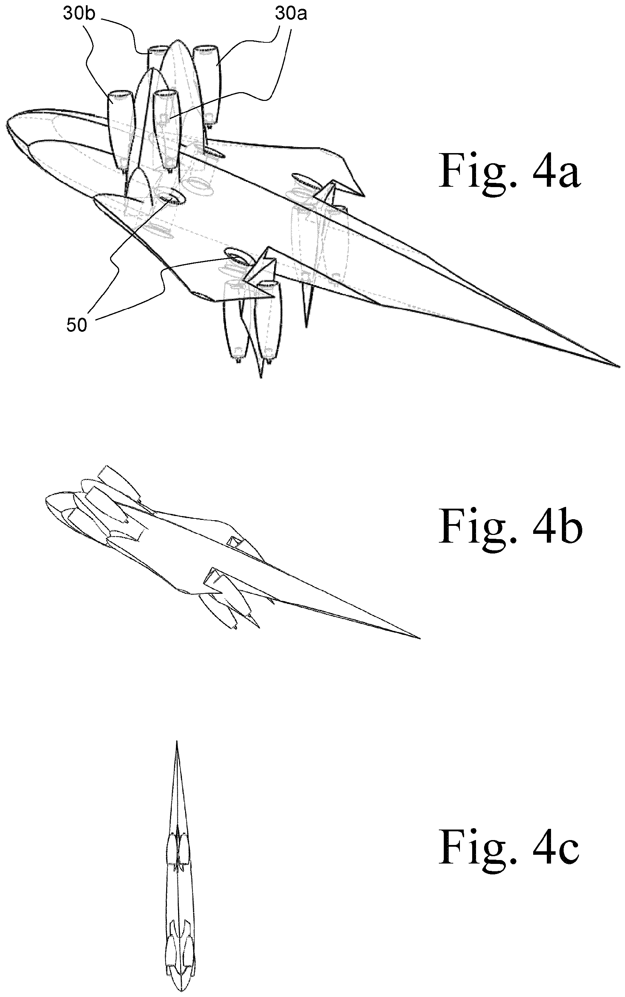

FIG. 4a illustrates the vertical ascent sequence for the aircraft that does not have the vertical stabilizer 44. FIG. 4b and FIG. 4c illustrate the vertical descent sequence of the same aircraft. The aircraft has the ability to hover in fully vertical position and change orientations by utilizing the movable engine pairs 30.

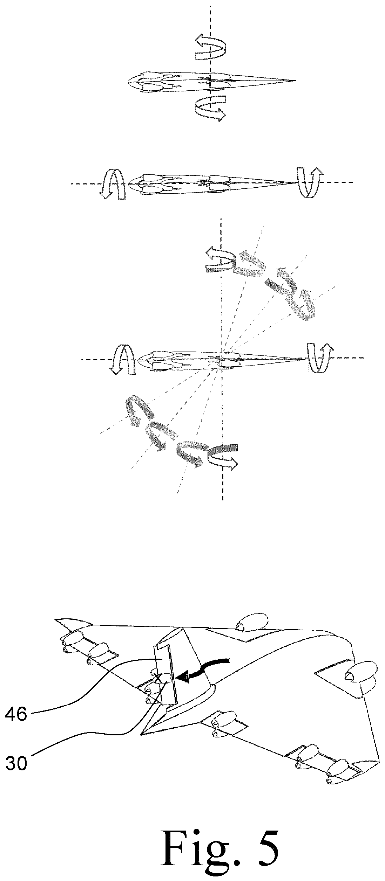

As illustrated in FIG. 5, the aircraft features 360-degree manoeuvrability, allowing it to rotate and tilt on any axis. This is achieved through a combination of dynamic flap adjustment to rapidly alter thrust direction; independent thrust vectoring from paired engines, enabling quick, precise rotations; and real-time stabilization via onboard control systems, ensuring controlled and responsive flight path adjustments. This design integrates thrust-based directional control, allowing instantaneous and precise attitude adjustments.

The vertical fin rudder 46 is designed to enhance the stability of the aircraft during flight, particularly when navigating acute flight angles. By incorporating engines 30 mounted on the vertical fin flap 46, the aircraft gains improved manoeuvrability and the ability to rotate along the horizontal axis without experiencing speed loss. This configuration provides significant advantages, especially in conditions where rapid directional adjustments are necessary.

The aircraft employs a coordinated control system integrating flaps 40, ailerons 42, and thrust-vectoring movable engines 30. The angular adjustment of a flap 40 or aileron 42, in combination with the direction of thrust from an active engine 30, facilitates rapid and precise alterations to the aircraft's flight trajectory, whether in terms of altitude changes, horizontal directional adjustments, or modifications to the angle of attack. Unlike conventional aircraft control solutions that primarily rely on flaps to change direction or modify the angle of attack, the disclosed design leverages both the quantity and direction of engine thrust to accelerate these transitions. This capability enables the aircraft to switch from a horizontal flight path to a vertical flight trajectory almost instantaneously.

The integration of flap angle control, engine thrust vectoring, and power modulation allows the aircraft to rotate and tilt along any axis, facilitating fast, dynamic, and precise manoeuvring. The ability to execute such movements without delays makes the aircraft highly responsive and adaptable in a variety of flight conditions. This configuration allows for an ultra-fast and flexible manoeuvrability system, making it particularly advantageous for operations requiring rapid response and highly controlled flight paths.

During conventional horizontal flight, only the essential engines remain active, reducing energy consumption and improving efficiency. The management system, in coordination with an onboard pilot (if present), dynamically determines which engines should be engaged at any given moment based on manoeuvring requirements and real-time flight conditions. The system autonomously or semi-autonomously activates the necessary engines to execute manoeuvres and flight path modifications requested by flight control algorithms or pilot commands.

Additionally, retractable openings integrated into the wing structure provide an optional feature that enhances the usability of engines positioned on either the upper or lower wing surfaces. As the flap movement adjusts, these retractable openings allow engines to be deployed or remain covered as required. This functionality ensures that engines transition smoothly between active and inactive states, enhancing thrust efficiency and aerodynamic performance when needed.

This design allows the aircraft to switch from horizontal flight to vertical flight almost instantly; perform aggressive tilting and banking manoeuvres without losing speed; and maintain stability in turbulent conditions or confined spaces, such as urban landscapes.

In one embodiment, the aircraft is equipped with an onboard flight control system, configured to manage engine thrust distribution based on flight conditions; flap positioning adjustments for optimal manoeuvrability; and aerodynamic stability control for smooth transitions. The system comprises a processor 60 for computational control and a memory 62 storing control algorithms to execute real-time adjustments. The system further comprises a transceiver 64 for remote or autonomous operation and multiple sensors 66, comprising gyroscopes, accelerometers, and airflow detectors.

The processor 60 may execute commands running flying functions or artificial intelligence algorithms. The unmanned aerial vehicle may comprise multiple sensors providing spatial and positioning data. Internal sensors may comprise multiple gyroscopes configured to detect movement from multiple axis; an imaging device may provide data from nearby objects, obstacles, markers, or positions. A positioning sensor such as GPS may provide positioning data that the unmanned aerial vehicle may compare to its previously stored map data. Various environmental sensors may provide information about temperature, battery capacity, humidity, or wind speed. The data is used within the controlling functions of the processor 60. In one embodiment the remote unit input passes through the controlling application which communicates with the unmanned aerial vehicle.

The flight control system continuously analyses flight conditions and dynamically adjusts thrust and control surfaces to optimize performance. This ensures precision control in complex flight scenarios, including VTOL operations, rapid directional shifts, and low-speed manoeuvring in constrained environments.

The described aircraft provides several advantages, such as omnidirectional thrust control, which enables rapid manoeuvring in confined environments. Seamless vertical take-off and landing (VTOL) eliminates reliance on runways. Balanced lift distribution uses paired engines and airflow openings to prevent thrust imbalances. Enhanced aerodynamic efficiency minimizes drag and turbulence with adaptive flap systems. Ultra-fast manoeuvrability allows instantaneous yaw, pitch, and roll adjustments. Flexible deployment options enable operations in urban, emergency, military, and commercial settings.

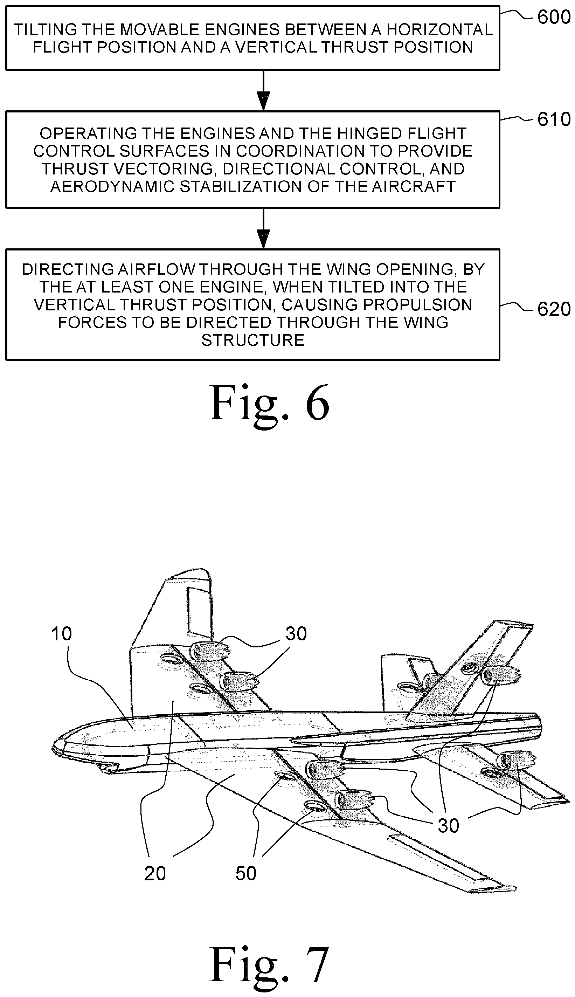

FIG. 6 is a flowchart showing steps of the method for controlling flight of the aircraft. Step 600 comprises tilting the movable engines between a horizontal flight position and a vertical thrust position. Step 610 comprises operating the engines and the hinged flight control surfaces in coordination to provide thrust vectoring, directional control, and aerodynamic stabilization of the aircraft. Step 620 comprises directing airflow through the wing opening, by the at least one engine, when tilted into the vertical thrust position, causing propulsion forces to be directed through the wing structure.

The shape of the fuselage 10 and the wing structure 20 may be varied according to the purposed use of the aircraft. FIG. 7 illustrates schematically one exemplary embodiment of the aircraft, having traditional tapered wing structure 20. The tapered wing structure comprises openings 50 and multiple movable engine pairs 30. Examples of wing structures 20 that could be utilized in the aircraft are a rectangular wing, a straight wing, a tapered wing, an elliptical wing, a swept wing, and a forward-swept wing.

An aircraft is disclosed herein. The aircraft comprises a fuselage; at least one wing structure extending laterally from the fuselage, and a plurality of movable engines, each engine being operatively connected to at least one hinged flight control surface mounted on the wing structure. The movable engines are configured to tilt between a horizontal flight position and a vertical thrust position. The engines and the hinged flight control surfaces are configured to operate in coordination to provide thrust vectoring, directional control, and aerodynamic stabilization of the aircraft. The movable engines are mounted in a paired configuration on opposite sides of the wing structure, with a first engine positioned on the top surface of the wing structure and a second engine positioned on the bottom surface of the wing structure; the wing structure comprises at least one opening positioned on the trajectory of at least one movable engine's airflow when the movable engine is in vertical thrust position; wherein, when tilted into the vertical thrust position, the at least one engine is configured to direct airflow through the wing opening, causing propulsion forces to be directed through the wing structure. In one embodiment, the wing structure comprises a hatch configured to selectively cover the opening. In one embodiment, the hatch is configured to expose the opening when the movable engine is configured to move into the vertical thrust position. In one embodiment, at least one paired configuration of the movable engines is mounted on the leading edge of the wing structure. In one embodiment, the wing structure comprises three movable engines in the paired configuration, wherein a first engine pair is positioned on the leading edge of the wing structure, and a second engine pair and a third engine pair are positioned on the trailing edge of the wing structure. In one embodiment, the movable engines and the wing structure are configured to enable vertical ascent, in the position, where: the movable engines are tilted into the vertical thrust position, directing propulsion forces downward; the movable engines positioned on both the leading edge and trailing edge of the wing structure are configured to generate coordinated thrust, providing vertical lift; the thrust from at least one leading-edge first engine pair passes through an opening in the wing structure; and the thrust from at least one trailing-edge second engine pair passes through an opening in the wing structure. In one embodiment, the hinged flight control surfaces, in coordination with engine thrust, dynamically adjust to stabilize lift distribution, and counteract aerodynamic disturbances during ascent. In one embodiment, the aircraft is an unmanned aerial vehicle.

Alternatively, or in addition, a method for controlling flight of an aircraft is disclosed herein. The aircraft comprises a fuselage; at least one wing structure extending laterally from the fuselage, and a plurality of movable engines, each engine being operatively connected to at least one hinged flight control surface mounted on the wing structure. The method comprises steps of: tilting the movable engines between a horizontal flight position and a vertical thrust position; and operating the engines and the hinged flight control surfaces in coordination to provide thrust vectoring, directional control, and aerodynamic stabilization of the aircraft. The movable engines are mounted in a paired configuration on opposite sides of the wing structure, with a first engine positioned on the top surface of the wing structure and a second engine positioned on the bottom surface of the wing structure. The wing structure comprises at least one opening positioned on the trajectory of at least one movable engine's airflow when the movable engine is in vertical thrust position. The method further comprises directing airflow through the wing opening, by the at least one engine, when tilted into the vertical thrust position, causing propulsion forces to be directed through the wing structure. In one embodiment, the method comprises selectively covering the opening in the wing structure by a hatch. In one embodiment, the method comprises exposing the opening by the hatch when the movable engine is configured to move into the vertical thrust position. In one embodiment, the wing structure comprises three movable engines in the paired configuration, wherein a first engine pair is positioned on the leading edge of the wing structure, and a second engine pair and a third engine pair are positioned on the trailing edge of the wing structure. In one embodiment, the method comprises enabling vertical ascent by the movable engines and the wing structure in the position, where tilting the movable engines into the vertical thrust position, directing propulsion forces downward; generating coordinated thrust, and providing vertical lift by the movable engines positioned on both the leading edge and trailing edge of the wing structure; passing the thrust from at least one leading-edge first engine pair through an opening in the wing structure; and passing the thrust from at least one trailing-edge second engine pair through an opening in the wing structure. In one embodiment, the method comprises adjusting dynamically the hinged flight control surfaces, in coordination with engine thrust, to stabilize lift distribution and counteract aerodynamic disturbances during ascent. In one embodiment, the aircraft is an unmanned aerial vehicle.

Alternatively, or in addition, the controlling functionality described herein can be performed, at least in part, by one or more hardware components or hardware logic components. An example of the control system described hereinbefore is a computing-based device comprising one or more processors which may be microprocessors, controllers or any other suitable type of processors for processing computer-executable instructions to control the operation of the device in order to control one or more sensors, receive sensor data and use the sensor data. The control system may be positioned on a host system and connected to the apparatus via a signal cable or the messages between the host and the apparatus may be transmitted wirelessly. The computer-executable instructions may be provided using any computer-readable media that is accessible by a computing-based device. Computer-readable media may include, for example, computer storage media, such as memory and communications media. Computer storage media, such as memory, includes volatile and non-volatile, removable, and non-removable media implemented in any method or technology for storage of information, such as computer-readable instructions, data structures, program modules, or other data. Computer storage media includes, but is not limited to, RAM, ROM, EPROM, EEPROM, flash memory, or other memory technology, CD-ROM, digital versatile disks (DVD), or other optical storage, magnetic cassettes, magnetic tape, magnetic disk storage or other magnetic storage devices, or any other non-transmission medium that can be used to store information for access by a computing device. In contrast, communication media may embody computer-readable instructions, data structures, program modules, or other data in a modulated data signal, such as a carrier wave, or other transport mechanism. As defined herein, computer storage media does not include communication media. Therefore, a computer storage medium should not be interpreted to be a propagating signal per se. Propagated signals may be present in a computer storage media, but propagated signals per se are not examples of computer storage media. Although the computer storage media is shown within the computing-based device, it will be appreciated that the storage may be distributed or located remotely and accessed via a network or other communication link, for example, by using a communication interface.

The aircraft , the unmanned aerial vehicle or the external controller may comprise an input/output controller arranged to output display information to a display device which may be separate from or integral to the aircraft, the unmanned aerial vehicle, or the external controller. The input/output controller is also arranged to receive and process input from one or more devices, such as a user input device (e.g. a mouse, keyboard, camera, microphone, or other sensor). The remote-controlled unmanned aerial vehicle may use various input or output information, or metrics received from sensors, from the host system or as commands from the external controller. In one example, the external controller is a smartphone connected wirelessly to the unmanned aerial vehicle.

The methods described herein may be performed by software in machine-readable form on a tangible storage medium e.g. in the form of a computer program comprising computer program code means adapted to perform all the steps of any of the methods described herein when the program is run on a computer and where the computer program may be embodied on a computer-readable medium. Examples of tangible storage media include computer storage devices comprising computer-readable media, such as disks, thumb drives, memory etc. and do not only include propagated signals. Propagated signals may be present in a tangible storage media, but propagated signals per se are not examples of tangible storage media. The software can be suitable for execution on a parallel processor or a serial processor such that the method steps may be carried out in any suitable order, or simultaneously.

Any range or device value given herein may be extended or altered without losing the effect sought.

Although at least a portion of the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item refers to one or more of those items.

The steps of the methods described herein may be carried out in any suitable order, or simultaneously where appropriate. Additionally, individual blocks may be deleted from any of the methods without departing from the spirit and scope of the subject matter described herein. Aspects of any of the examples described above may be combined with aspects of any of the other examples described to form further examples without losing the effect sought.

The term 'comprising' is used herein to mean including the method blocks or elements identified, but that such blocks or elements do not comprise an exclusive list and a method or apparatus may contain additional blocks or elements.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the spirit or scope of this specification.

## Claims

1. An aircraft, comprising:
a fuselage (10);
at least one wing structure (20) extending laterally from the fuselage (10), and
a plurality of movable engines (30), each engine (30) being operatively connected to at least one hinged flight control surface mounted on the wing structure (20),
the movable engines (30) are configured to tilt between a horizontal flight position and a vertical thrust position; wherein
the engines (30) and the hinged flight control surfaces are configured to operate in coordination to provide thrust vectoring, directional control,
and aerodynamic stabilization of the aircraft;
**characterized in that**:
the movable engines (30) are mounted in a paired configuration on opposite sides of the wing structure (20), with a first engine (30a) positioned on the top surface of the wing structure (20) and a second engine (30b) positioned on the bottom surface of the wing structure (20);
the wing structure (20) comprises at least one opening (50) positioned on the trajectory of at least one movable engine's (30) airflow when the movable engine (30) is in vertical thrust position; wherein,
when tilted into the vertical thrust position, the at least one engine (30) is configured to direct airflow through the wing opening (50), causing propulsion forces to be directed through the wing structure (20).

2. The aircraft according to claim 1, **characterized in that** the wing structure (20) comprises a hatch (52) configured to selectively cover the opening (50).

3. The aircraft according to claim 2, **characterized in that** the hatch (52) is configured to expose the opening (50) when the movable engine (30) is configured to move into the vertical thrust position.

4. The aircraft according to any of the claims 1 - 3, **characterized in that** at least one paired configuration of the movable engines (30) is mounted on the leading edge of the wing structure (20).

5. The aircraft according to any of the claims 1 - 4, **characterized in that** the wing structure (20) comprises three movable engines (30) in the paired configuration, wherein a first engine pair (31) is positioned on the leading edge of the wing structure (20), and a second engine pair (32) and a third engine pair (33) are positioned on the trailing edge of the wing structure (20).

6. The aircraft according to claim 5, **characterized in that** the movable engines (30) and the wing structure (20) are configured to enable vertical ascent, in the position, where:
the movable engines (30) are tilted into the vertical thrust position, directing propulsion forces downward;
the movable engines (30) positioned on both the leading edge and trailing edge of the wing structure (20) are configured to generate coordinated thrust, providing vertical lift;
the thrust from at least one leading-edge first engine pair (31) passes through an opening (50) in the wing structure (20); and
the thrust from at least one trailing edge second engine pair (32) passes through an opening (50) in the wing structure (20).

7. The aircraft according to claim 6, **characterized in that** the hinged flight control surfaces, in coordination with engine (30) thrust, dynamically adjust to stabilize lift distribution, and counteract aerodynamic disturbances during ascent.

8. The aircraft according to any of the claims 1 - 7, **characterized in that** the aircraft is an unmanned aerial vehicle.

9. A method for controlling flight of an aircraft, said aircraft comprising:
a fuselage (10);
at least one wing structure (20) extending laterally from the fuselage (10), and
a plurality of movable engines (30), each engine (30) being operatively connected to at least one hinged flight control surface mounted on the wing structure (20); wherein the method comprises steps of:
tilting the movable engines (30) between a horizontal flight position and a vertical thrust position; and
operating the engines (30) and the hinged flight control surfaces in coordination to provide thrust vectoring, directional control, and
aerodynamic stabilization of the aircraft;
**characterized in that**:
the movable engines (30) are mounted in a paired configuration on opposite sides of the wing structure (20), with a first engine (30a) positioned on the top surface of the wing structure (20) and a second engine (30b) positioned on the bottom surface of the wing structure (20);
the wing structure (20) comprises at least one opening (50) positioned on the trajectory of at least one movable engine's airflow when the movable engine (30) is in vertical thrust position; wherein the method further comprises:
directing airflow through the wing opening (50), by the at least one engine, when tilted into the vertical thrust position, causing propulsion forces to be directed through the wing structure (20).

10. The method according to claim 9, c**haracterized** by selectively covering the opening (50) in the wing structure (20) by a hatch (52).

11. The method according to claim 10, c**haracterized** by exposing the opening (50) by the hatch (52) when the movable engine (30) is configured to move into the vertical thrust position.

12. The method according to any of the claims 9 - 11, **characterized in that** the wing structure (20) comprises three movable engines (30) in the paired configuration, wherein a first engine pair is positioned on the leading edge of the wing structure (20), and a second engine pair and a third engine pair are positioned on the trailing edge of the wing structure (20).

13. The method according to claim 12, **characterized by** enabling vertical ascent by the movable engines (30) and the wing structure (20) in the position, where:
tilting the movable engines (30) into the vertical thrust position, directing propulsion forces downward;
generating coordinated thrust, and providing vertical lift by the movable engines (30) positioned on both the leading edge and trailing edge of the wing structure (20);
passing the thrust from at least one leading-edge first engine pair through an opening (50) in the wing structure (20); and
passing the thrust from at least one trailing edge second engine pair through an opening (50) in the wing structure (20).

14. The method according to claim 13, **characterized by** adjusting dynamically the hinged flight control surfaces, in coordination with engine (30) thrust, to stabilize lift distribution and counteract aerodynamic disturbances during ascent.

15. The aircraft according to any of the claims 9 - 14, c**haracterize**d in that the aircraft is an unmanned aerial vehicle.
